Europäisches Patentamt

**European Patent Office**

Office européen des brevets

(11) Numéro de publication: **0 213 679 B1**

(12) **FASCICULE DE BREVET EUROPEEN**

(45) Date de publication du fascicule du brevet:
21.03.90

(51) Int. Cl.⁴: **H04M 9/08**

(21) Numéro de dépôt: 86201481.8

(22) Date de dépôt: 29.08.86

(54) Poste téléphonique muni d'une écoute amplifiée et d'un dispositif anti-Larsen.

(30) Priorité: 03.09.85 FR 8513062

(43) Date de publication de la demande:
11.03.87 Bulletin 87/11

(45) Mention de la délivrance du brevet:
21.03.90 Bulletin 90/12

(84) Etats contractants désignés:
DE FR GB IT SE

(56) Documents cités:
FR-A- 2 537 810
GB-A- 2 096 434

PATENTS ABSTRACTS OF JAPAN,
vol. 9, no. 225 (E-342)[1948], 11 septembre 1985; &
JP-A-60 83 458 (MITSUBISHI DENKI K.K.) 11-05-1985

(73) Titulaire: RTC-COMPELEC, 117, quai du Président
Roosevelt, F-92130 Issy les Moulineaux(FR)

(84) Etats contractants désignés: FR

(73) Titulaire: N.V. Philips' Gloeilampenfabrieken,
Groenewoudseweg 1, NL-5621 BA Eindhoven(NL)

(84) Etats contractants désignés: DE GB IT SE

(72) Inventeur: Coulmance, Jean-Pierre, SOCIETE CIVILE
S.P.I.D. 209, rue de l'Université, F-75007 Paris(FR)

(74) Mandataire: Pinchon, Pierre et al, Société Civile
S.P.I.D. 209 rue de l'Université, F-75007 Paris(FR)

## Description

La présente invention concerne un poste téléphonique à écoute amplifiée muni d'un dispositif anti-Larsen, d'un circuit de séparation des signaux reçus ou émis sur une ligne téléphonique, d'un microphone, d'un amplificateur de puissance pour les signaux reçus dont la sortie est connectée à un haut-parleur d'écoute amplifiée, ledit dispositif anti-Larsen étant composé d'un circuit de détection d'un début d'instabilité qui commande, par un commutateur temporisé, la mise en service pour une durée prédéterminée, d'au moins un atténuateur dans le trajet d'au moins l'une des voies d'écoute ou d'émission.

Un poste téléphonique de ce type est notamment connu du brevet FR-A 2 537 810. Dans le poste téléphonique connu, ledit circuit de détection d'un début d'instabilité commande en "toute ou rien" la mise en service d'un atténuateur disposé dans la voie d'écoute amplifiée. Ce circuit, utilisant le dépassement d'un seuil de niveau de signal sur la voie d'émission (signal du microphone), pour commander la mise en service de l'atténuateur, comporte un filtre passe-haut ou passe-bande de sorte qu'il est plus sensible aux signaux dont la fréquence est voisine de celle à laquelle l'effet Larsen peut se produire et moins sensible par contre, aux bruits de fréquence plus basse.

Selon le document cité, il est également proposé, en variante, d'ajouter des moyens permettant de décaler vers le haut la fréquence à laquelle se produit l'effet Larsen de manière à ce que le début d'instabilité perçu par l'utilisateur pendant le délai de réaction du circuit de détection soit moins désagréable et aussi de manière à reporter à une fréquence plus élevée la sensibilité de ce dispositif aux bruits environnant le microphone.

Si une telle disposition réduit les risques de déclenchement intempestif de mise en service de l'atténuateur sous l'effet d'un bruit à l'émission, il reste que ce risque demeure. Par ailleurs, des considérations pratiques conduisent à utiliser de préférence, en tant que filtre passe-haut ou passe-bande, des filtres qui ont un faible amortissement et qui de ce fait provoquent aisément une instabilité de la boucle dans laquelle ils sont insérés. De plus, le fait de décaler volontairement vers le haut la fréquence à laquelle se produit l'effet Larsen n'offre pas une immunité suffisante contre l'effet des bruits d'environnement du microphone car les harmoniques des signaux de bruit causés par le manque de linéarité, pratiquement inévitable, des filtres et des amplificateurs, risquent encore de déclencher intempestivement la mise en service de l'atténuateur. Il serait donc souhaitable que le dispositif anti-Larsen ne réagisse qu'au seul phénomène d'effet larsen et reste totalement insensible aux bruits d'environnement du microphone.

Enfin, dans la mise en oeuvre du dispositif anti-Larsen connu, il est nécessaire d'adopter un compromis pratique ayant trait à la constante de temps d'intégration du signal redressé du microphone en vue de son application à un comparateur à seuil. En effet, l'immunité du circuit aux bruits transitoires est d'autant meilleure que la constante de temps en question est élevée, tandis qu'au contraire, l'effet perçu par l'utilisateur durant le délai correspondant est d'autant plus désagréable qu'il dure plus longtemps.

Le document cité concerne un poste téléphonique dans lequel la commande de l'atténuateur est opérée en tout ou rien. Il est également connu par ailleurs d'utiliser un jeu d'atténuateurs opérant par valeurs discrètes, de 6 dB par exemple, qui sont mis en service successivement en série tant que l'effet Larsen persiste.

Il est encore proposé, selon d'autres réalisations de l'art antérieur, d'opérer une commande proportionnelle d'un atténuateur variable, commande dont le signal est déduit, soit du niveau de signal d'écoute, soit du niveau du signal d'émission, soit d'une combinaison des niveaux de ces signaux. Cependant, ce genre de technique necessite de combattre une difficulté supplémentaire liée à son principe, pour empêcher une instabilité propre du dispositif anti-Larsen et les moyens à mettre en oeuvre sont alors complexes et donc onéreux.

La présente invention a pour but de remédier aux inconvénients précités tout en offrant une solution simple, économique et dont les éléments constitutifs, au moins dans leur majorité, sont facilement intégrables dans un circuit monolithique.

L'invention repose sur l'idée qu'un dispositif anti-Larsen dont le signal de commande d'atténuation serait déduit d'une combinaison des signaux d'écoute et d'émission qui en plus de l'amplitude, serait sensible à la phase de ces signaux et à l'égalité de leurs composantes en fréquences, serait particulièrement insensible aux bruits d'environnement du microphone.

En effet, selon la présente invention, un poste téléphonique à écoute amplifée du type défini en préambule est notamment caractérisé en ce que le circuit de détection d'instabilité comporte

- un premier circuit multiplicateur analogique dont l'une des entrées reçoit le signal appliqué au haut-parleur d'écoute et l'autre entrée reçoit le signal provenant du microphone après amplification de ce signal par un aplificateur à gain élevé,

- un deuxième circuit multiplicateur analogique dont les entrées sont reliées en parallèle aux entrées du premier circuit multiplicateur, via l'une d'entre elles un circuit déphaseur, ce circuit déphaseur introduisant un déphasage de 90° pour une fréquence voisine de celle à laquelle se produit l'effet Larsen,

- un circuit d'addition à deux entrées,

- un premier filtre passe-bas dont l'entrée est connectée à la sortie du premier circuit multiplicateur, dont la sortie est reliée à l'une des entrées du circuit d'addition via un convertisseur de signal en valeur absolue, et un deuxième filtre passe-bas dont l'entrée est connectée à la sortie du deuxième circuit multiplicateur, dont la sortie est reliée à l'autre entrée du circuit d'addition via un autre convertisseur de signal en valeur absolue,

- un comparateur à seuil recevant le signal de sortie du circuit d'addition et fournissant en sortie un signal de commande pour ledit commutateur temporisé.

L'invention tire son avantage de ce que le signal de commande d'atténuation est déduit de la multiplication des signaux d'émission et d'écoute, multiplication qui ne fait apparaître une composante de courant continu significative qu'en présence de l'effet Larsen. La composante à fréquence double produite par la multiplication des signaux est aisément éliminée par un filtre qui ne requiert qu'une constante de temps faible ce qui procure l'avantage que le délai d'intervention obtenu par le dispositif anti-Larsen proposé selon l'invention est nettement plus court que celui de l'art antérieur, et donc moins gênant pour l'utilisateur.

Le cas particulier pour lequel les signaux d'écoute et d'émission st trouveraient déphasés de 90° - cas pour lequel une composante continue n'est pas produite par le premier circuit multiplicateur - se trouve résolu selon l'invention, par la présence de la chaîne complémentaire comportant le deuxième circuit multiplicateur, le deuxième filtre passe-bas et son circuit d'addition associé, chaîne qui reçoit sur l'une de ses entrées un signal déphasé de 90° environ à la fréquence où l'effet Larsen se produit.

Par amplificateur à gain élevé on entend un amplificateur de gain suffisant pour qu'en présence d'effet Larsen, le signal amplifié du microphone se sature à une tension crête voisine de la moitié de la tension d'alimentation de cet amplicateur (si l'amplicateur est alimenté par une seule tension, par rapport à la masse), ou encore, se sature à une tension crête voisine de l'une des deux tensions d'alimentation (dans le cas d'une alimentation double symétrique).

Il est clair que l'on peut choisir de placer l'atténuateur soit dans la voie de réception et dans ce cas, de préférence dans la voie d'écoute amplifiée, de manière à ne pas perturber le signal de l'écouteur du combiné, soit encore dans la voie d'émission liée au microphone.

On peut encore, si on le désire, appliquer la commande issue du circuit de détection à la mise en service de deux atténuateurs, l'un dans la voie d'écoute et l'autre dans la voie d'émission.

Selon un premier mode de mise in oeuvre de l'invention, le poste téléphonique est en outre caractérisé en ce que le commutateur temporisé comporte des moyens pour appliquer des durées de temporisation différentes, et en ce qu'il met en service si nécessaire ledit atténuateur pour une première durée comptée à partir du début de la conversation téléphonique, dont la valeur est de l'ordre de la seconde, tandis que la ou les mises en service suivantes de l'atténuateur, lorsqu'elles se produisent, sont appliquées pendant une autre durée de valeur plus élevée que la première durée.

Comme les conditions les plus favorables à la production de l'effet Larsen sont créées à l'instant où le combiné du poste est décroché alors que celui-ci se présente très près du haut-parleur d'écoute amplifiée, ce mode de mise en oeuvre permet qu'un nouveau test soit rapidement effectué pour le début de la conversation, lorsque les conditions alors réalisées rendent l'effet Larsen beaucoup moins probable.

Un deuxième mode de mise en oeuvre de l'invention se caractérise en ce que l'atténuateur comporte plusieurs niveaux discrets d'atténuation qui sont mis en service successivement dans un ordre croissant sous l'effet de la commande du dispositif anti-Larsen, alors que le niveau d'atténuation obtenu après disparition de l'effet larsen est ensuite maintenu.

On dispose de l'avantage que l'action ici est plus progressive bien qu'obtenue par valeurs discrètes, et que le degré d'atténuation finalement retenu est proche du niveau nécessaire et non pas nettement plus élevé comme on est obligé de le prévoir dans le cas d'un atténuateur à un seul niveau. Bien entendu ce mode de mise en oeuvre peut être combiné avec le premier pour en tirer des avantages combinés.

Un troisième mode de mise en oeuvre de l'invention est caractérisé par l'utilisation d'au moins un atténuateur dans chacune des voies d'émission et d'écoute et par la présence de moyens de commutation pour la mise en service de ces atténuateurs alternativement dans chacune desdites voies, ainsi que la présence d'un dispositif de détection de parole pour la commande desdits moyens de commutation.

Ce mode de mise en oeuvre a pour avantage qu'aucun des utilisateurs en conversation ne perçoit de manière gênante la mise en service des atténuateurs qui s'opère pour chacun d'eux sur sa voie de réception non utilisée.

La description qui va suivre en regard des dessins annexés fera bien comprendre comment l'invention peut être réalisée.

La figure 1 représente, par un diagramme schématique, un poste téléphonique selon l'invention.

La figure 2 montre un exemple typique de courbe de réponse d'un microphone pour poste téléphonique.

La figure 3 indique le schéma d'un circuit déphaseur qui peut être utilisé dans le poste téléphonique selon l'invention.

La figure 4 est un diagramme schématique introduisant en complément de la figure 1, plusieurs modes de mise en oeuvre de l'invention.

La figure 5 montre un diagramme schématique d'un circuit de détection de l'effet Larsen selon une variante de celui décrit à la figure 1.

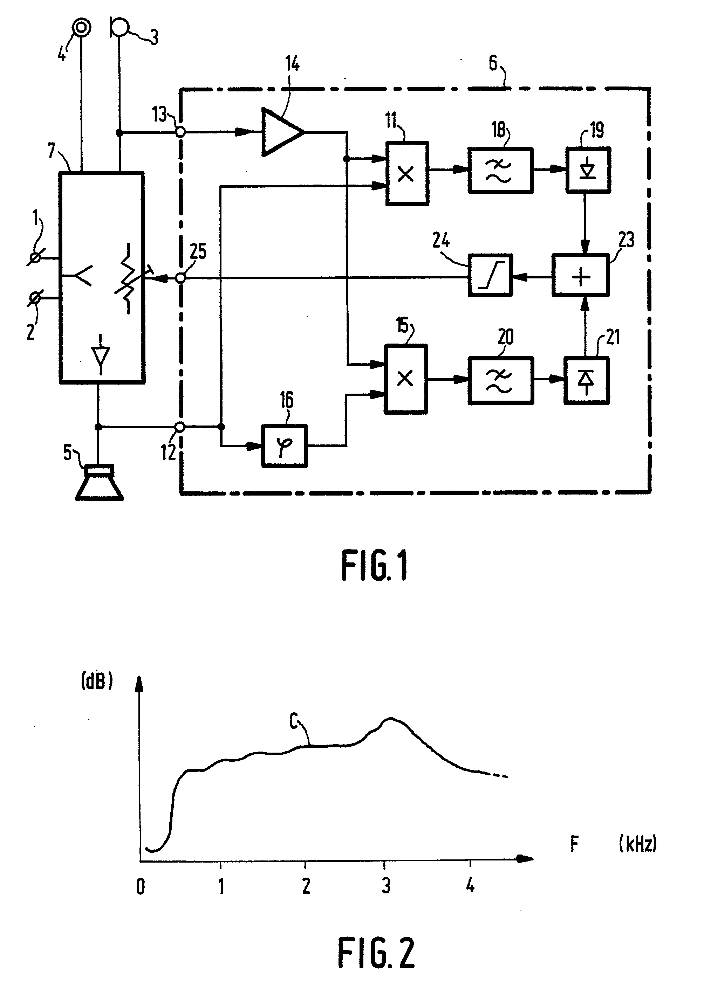

La figure 1 indique le schéma général d'un poste téléphonique selon l'invention. Aux bornes 1 et 2 du poste sont connectés les fils de ligne. Le poste comporte par ailleurs un microphone 3, un écouteur téléphonique 4, un haut-parleur 5 pour l'écoute amplifiée, ainsi qu'un circuit de détection de l'effet Larsen dont l'ensemble des fonctions est contenu à l'intérieur du cadre en trait mixte portant la référence 6. Pour plus de simplicité, sur la figure 1, les autres fonctions du poste téléphonique ont été regroupées au sein d'un bloc repéré en 7, qui comprend essentiellement un circuit de séparation des signaux reçus ou émis sur la ligne téléphonique, un amplificateur de puissance pour les signaux reçus, appliqué au haut-parleur 5 d'écoute amplifiée, d'éventuels amplificateurs additionnels pour les signaux transmis à l'écouteur 4 d'une part et reçus du microphone 3 d'autre part, ainsi qu'un commutateur temporisé commandant un ou plusieurs atténuateurs qui réalisent par leur mise en service l'atténuation nécessaire à la suppression de l'effet Larsen.

Tout début d'instabilité est détecté par le circuit de détection 6 qui commande à sa sortie le commutateur temporisé précité. L'ensemble formé par le circuit de détection 6, le commutateur temporisé et le ou les atténuateurs constitue ce que l'on a dénommé: dispositif anti Larsen. Le circuit de détection 6 comporte un premier circuit multiplicateur 11 analogique dont l'une des entrées reçoit le signal appliqué au haut-parleur 5 par la borne 12, et l'autre entrée reçoit le signal provenant du microphone 3 connecté à la borne 13 par l'intermédiaire d'un amplificateur à gain élevé 14.

Le circuit de détection 6 comporte également un deuxième circuit multiplicateur 15 analogique, dont les entrées sont reliées en parallèle aux entrées du premier circuit multiplicateur 11, d'une part directement pour l'une d'entre elles, et d'autre part via un circuit déphaseur 16 pour l'autre entrée. Le circuit déphaseur 16 introduit un déphasage de 90° pour une fréquence voisine de celle à laquelle se produit généralement l'effet Larsen. On sait en effet que l'effet Larsen, dans un poste téléphonique, a le plus de chance de se produire à une fréquence qui se situe entre 2,5 et 3,5 kHz, ceci étant dû essentiellement à la courbe de réponse du microphone ainsi que celle de l'amplificateur associé, qui présente un maximum dans cette plage de fréquences.

Au moins pour une série de postes téléphoniques construits à partir d'éléments semblables, on connaît donc avec une relative précision la fréquence à laquelle l'effet Larsen va se produire. Il est par conséquent possible de prévoir un circuit déphaseur 16 qui procure une rotation de phase d'une valeur assez proche de 90° à cette fréquence. De plus, la précision sur la rotation de phase n'est pas critique pour le fonctionnement du circuit de détection.

Le premier circuit multiplicateur 11 est relié en sortie à l'entrée d'un premier filtre passe-bas 18, lequel fournit un signal en sortie appliqué à un convertisseur de signal en valeur absolue 19, tandis que la sortie du deuxième circuit multiplicateur 15 est connectée à l'entrée d'un deuxième filtre passe-bas 20, dont le signal de sortie est transformé par un autre convertisseur en valeur absolue 21. La sortie des deux convertisseurs en valeur absolue 19 et 21 est connectée aux deux entrées d'un circuit d'addition 23 dont la sortie est reliée à un comparateur à seuil 24, lequel fournit à sa sortie un signal de commande pour le commutateur temporisé à partir de la borne de sortie 25 du circuit de détection 6.

Le fonctionnement du circuit de détection 6 repose sur les observations suivantes. On constate tout d'abord que lorsque l'effet Larsen se produit, le signal appliqué au haut-parleur se sature à une valeur élevée limitée par la tension d'alimentation de son amplificateur. D'autre part, le signal issu du microphone, en présence de l'effet Larsen, se caractérise également par un niveau de signal élevé, mais dont la valeur peut varier d'un poste téléphonique à l'autre et selon les circonstances. Cependant, au moyen d'un amplificateur à gain très élevé tel que 14, on peut amener le signal issu du microphone à se saturer à une valeur connue, pratiquement constante, qui dépend uniquement de la tension d'alimentation dudit amplificateur. A partir des deux signaux, d'une part issu du haut-parleur 5 et d'autre part issu du microphone 3 et amplifié par l'amplificateur 14, on obtient par leur produit, lorsque ces signaux présentent une fréquence à déphasage fixe, d'une part une composante de signal à fréquence double de la fréquence du signal larsen, et d'autre part une composante de courant continu qui peut être positive, négative ou nulle, selon la différence de phase entre les deux signaux qui ont été multipliés.

Si l'on considère tout d'abord le cas de la composante continue positive ou négative, celle-ci peut être rendue uniquement positive au moyen d'un convertisseur de signal en valeur absolue 19, la composante à fréquence double étant éliminée par le filtre passe-bas 18. Le cas pour lequel le résultat de la multiplication entraine une composante de courant continu de valeur nulle se produit lorsque les deux signaux appliqués à l'entrée du circuit multiplicateur 11 sont déphasés entre eux de 90°.

Conformément au circuit de détection 6 décrit sur la figure 1, ce dernier cas est éliminé par la branche de circuit comportant le déphaseur 16, le deuxième circuit multiplicateur 15, le filtre passe-bas 20 et le convertisseur de signal en valeur absolue 21. En effet, lorsque les signaux à l'entrée du premier circuit multiplicateur 11 sont déphasés de 90°, les signaux appliqués au deuxième circuit multiplicateur 15 sont alors en phase ou en opposition de phase et dans ce cas, le résultat obtenu à la sortie dudit circuit multiplicateur 15 comporte une composante de courant continu de valeur positive ou négative. Si par exemple, les deux circuits convertisseurs en valeur absolue 19 et 21 produisent un signal positif, leur somme, au moyen du circuit d'addition 23, produit dans tous les cas et pour toutes les valeurs possibles de déphasage, un signal de courant continu positif. Ce signal est alors appliqué au comparateur à seuil 24, qui fournit en sortie un signal de commande transmis à la borne 25, lorsque le signal appliqué à son entrée dépasse un seuil prédéterminé qui est caractéristique de la présence de l'effet larsen.

Un des avantages du circuit de détection 6 provient du fait que lorsque l'effet larsen survient au moins pendant une durée courte, les signaux de sortie des circuits multiplicateurs 11 et 15 présentent chacun une composante continue dont le signe est fixe, de sorte qu'intégrés rapidement par les filtres passe-bas 18 et 20 et convertis respectivement par chaque convertisseur de signal en valeur absolue 19 et 21, ils procurent à l'entrée du comparateur à seuil 24 un signal continu de valeur élevée dans un délai particulièrement court. Au contraire, dans le cas d'un bruit dont le spectre de fréquence peut être considéré comme étendu et l'amplitude distribuée plus ou moins uniformément dans ce spectre, le couplage acoustique, principalement responsable de l'effet Larsen va introduire, entre les signaux provenant du microphone 3 et du haut-parleur 5, une différence de phase qui varie largement sur l'étendue de ce spectre de fréquence. Ainsi, à la sortie des circuits multiplicateurs 11 et 15, les signaux présentent sous la forme fugitive des composantes continues dont le signe et l'amplitude varient de manière aléatoire. Ceci entraine que, par l'effet des filtres passe-bas 18 et 20, la moyenne de ces signaux se trouve à un niveau considérablement plus faible que celui des signaux correspondants dans le cas de l'effet Larsen. En d'autres termes, le circuit de détection 6 permet de distinguer la présence d'effet Larsen par rapport à un bruit ambiant, de manière plus efficace que les dispositifs de l'art antérieur.

Un autre avantage de l'invention réside dans le fait que pour séparer du bruit le signal d'instabilité dû à l'effet Larsen, on peut utiliser des filtres passe-bas 18 et 20 qui ont une fréquence de coupure plus élevée que ceux de l'art antérieur. Ceci entraine un délai de réponse plus court du dispositif. Il s'agit en effet de séparer deux composantes dont l'une est en courant continu et l'autre à une fréquence double de la fréquence d'origine. On obtient donc que le circuit de détection 6 permet d'éviter plus efficacement une réaction intempestive au bruit environnant et qu'il offre l'avantage d'une réponse plus rapide que les circuits de l'art antérieur. Ce délai de réponse n'est en effet pas tributaire d'un compromis entre la sélectivité et la constante de temps de réaction. Cet avantage est important, car il permet de supprimer l'effet Larsen en un temps si bref qu'il est à peine perceptible par l'utilisateur et donc peu gênant en pratique.

On peut indiquer, à titre d'exemple, que les filtres passe-bas 18 et 20 peuvent être choisis avec une fréquence de coupure à 200 Hz, ce qui entraine un temps de réaction du circuit de détection 6 de l'ordre de quelques millisecondes seulement. Les signaux, à une fréquence de l'ordre de 3000 Hz peuvent être atténués d'au moins 20 dB par ces mêmes filtres. Il est encore précisé que des signaux de 3000 Hz, à la sortie de l'un des circuits multiplicateurs 11 ou 15, correspondent en réalité à des signaux de fréquence moitié, c'est-à-dire 1500 Hz appliqués aux entrées de ces circuits multiplicateurs. Cette valeur de 1500 Hz est relativement proche de la fréquence pour laquelle le signal de parole possède en général son maximum d'énergie.

En ce qui concerne la fréquence à laquelle se produit le plus fréquemment l'effet Larsen, il faut observer encore que le microphone a une influence prépondérante puisque sa courbe de réponse est fixée dans un gabarit imposé qui prévoit une atténuation importante en dessous de 300 Hz et au-dessus de 3400 Hz.

En complément aux explications relatives au diagramme de la figure 1, il est utile de mentionner ci-après une légère variante qui n'y a pas été représentée.

On peut en effet, dans l'une des liaisons connectée à la borne 12 ou à la borne 13, ou encore dans ces deux liaisons à la fois, interposer un filtre passe-haut, de manière à réduire encore le signal résiduel à la sortie du circuit d'addition 23 en présence de signaux d'émission/réception qui se situent dans la plage de fréquences inférieure à celle où se produit l'effet Larsen. En tant que filtre passe-haut on peut utiliser, par exemple, une simple capacité de valeur convenable.

La figure 2 représente un exemple typique de courbe de réponse d'un microphone téléphonique en fonction de la fréquence. On observe sur cette figure un maximum de réponse au voisinage de 3 kHz. En ce qui concerne le haut-parleur dont l'effet se combine à celui du microphone, sa courbe de réponse présente, le plus fréquemment, des bosses pour les fréquences correspondant à des résonances dont l'une est située à relativement basse fréquence et les autres distribuées à fréquences plutôt élevées. La combinaison de ces courbes de réponse détermine un maximum qui pour des équipements standards présente peu de dispersion en fréquences. C'est pourquoi le circuit déphaseur 16 peut être aisément choisi, de manière à ce qu'il procure un déphasage de sensiblement 90° pour la fréquence à laquelle se produit l'effet Larsen, et surtout lorsqu'il s'agit d'une série d'appareils construits à partir d'éléments standards. Si on le désire, on peut également prévoir que le circuit déphaseur 16 soit ajustable, de manière à le régler pour un poste téléphonique déterminé. Il est indiqué par ailleurs que lorsque l'effet Larsen se produit, le déphasage entre les signaux produits d'une part par le microphone 3 et d'autre part par le haut-parleur 5, ne peut être connu à l'avance et il dépend des circonstances particulières de l'utilisation (distance entre le microphone et le haut-parleur, effet de résonance du local, proximité d'objets réfléchissants, etc...). Selon la valeur du déphasage entre les signaux du microphone et du haut-parleur, il est facile de constater que le signal de sortie du circuit d'addition 23 peut fluctuer selon un facteur $\sqrt{2}$.

Ces fluctuations n'offrent pas d'inconvénient majeur car le comparateur à seuil 24 peut être réglé aisément sur un niveau qui est éloigné à la fois du niveau provoqué par les bruits, (niveau qui reste faible dans ce cas) du niveau de signal, élevé, produit en présence d'effet Larsen. Les fluctuations supplémentaires dues à une rotation de phase qui s'écarterait quelque peu de 90° ne seront pas plus gênantes puisque plus faibles.

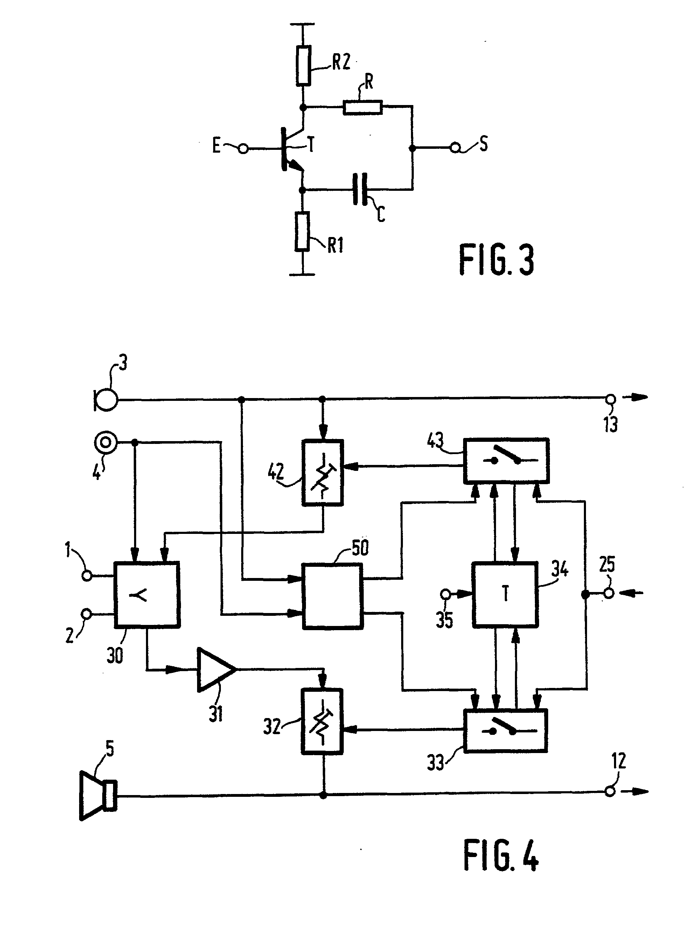

La figure 3 indique, à titre d'exemple, le schéma d'un circuit déphaseur qui peut être utilisé en tant que circuit déphaseur 16 de la figure 1. Bien entendu, d'autres circuits déphaseurs connus peuvent également être utilisés. Le circuit de la figure 3 comporte une borne d'entrée E, reliée à la base d'un transistor T dont l'émetteur est connecté à une résistance R1 et le collecteur à une résistance R2. Le collecteur du transistor T est encore connecté à une résistance R, dont l'autre extrémité est reliée à la borne de sortie S, tandis que l'émetteur du transistor T est connecté à un condensateur C dont l'autre extrémité est également reliée à la borne de sortie S. Les résistances R1 et R2 sont choisies de valeurs égales. On considère, pour simplifier, que la valeur des résistances R1 et R2 est petite devant celle de la résistance R, et que la sortie S est connectée sur une impédance de valeur très élevée devant R. Ce circuit déphaseur est connu en tant que tel. Il procure en sortie un signal déphasé de 90° par rapport au signal d'entrée appliqué à la borne E lorsque la fréquence de ce signal ainsi que les valeurs de R et de C vérifient la relation suivante :

$$2\pi FC(R+R2) = 1 \quad (1)$$

Il est aisé de calculer que pour une variation de fréquence de plus ou moins 30 % par rapport à la fréquence de référence de ce circuit, (c'est-à-dire la fréquence pour laquelle la relation (1) est vérifiée), on introduit une variation de la rotation de phase qui reste inférieure à ± 20°. Il est clair qu'une telle fluctuation reste sans conséquence notable sur le fonctionnement du circuit de détection 6.

A l'aide de la figure 4, on va décrire maintenant plusieurs modes caractéristiques de mise en oeuvre de l'invention.

Sur la figure 4, ledit bloc des autres fonctions 7 de la figure 1 a été représenté avec plus de détails, tandis que le circuit de détection 6 de la figure 1, quant à lui, n'a pas été représenté. Les éléments de la figure 4 qui sont communs à ceux de la figure 1 portent les mêmes références numériques. Les bornes 1 et 2 à raccorder aux fils de ligne sont connectées à un circuit séparateur émission/réception 30, dit "hybride", lequel fournit à un amplificateur 31 de puissance le signal de réception. A la sortie de l'amplificateur 31 est connecté en série dans la liaison vers le haut-parleur 5, un atténuateur 32 dont la mise en service est commandée par un commutateur 33. Si l'atténuateur 32 n'est pas mis en service, il se trouve alors court-circuité. Le commutateur 33 est à son tour commandé à partir de la borne 25 recevant le signal de commande issu du circuit de détection 6 (figure 1).

Le commutateur 33 est actionné sous le contrôle d'un dispositif de temporisation 34 qui maintient l'atténuateur 32 en service, pour une ou plusieurs durées prédéterminées. Dans une forme de réalisation simple indiquée à titre d'exemple, le dispositif de temporisation 34 peut être constitué d'un compteur associé à une horloge ou la fonction réalisée par programmation d'un microprocesseur. Comme on le verra ultérieurement, le dispositif de temporisation 34 peut dans certains cas comporter une commande de remise à zéro à partir d'une borne 35, laquelle reçoit un signal caractérisant le décrochage du combiné et indiquant le début d'un conversation.

Bien entendu, l'atténuateur 32 qui a été représenté sur la figure 4, comme étant inséré à la sortie de l'amplificateur de puissance 31, peut encore, selon un mode de réalisation non représenté, être inséré entre le séparateur 30 et l'amplificateur de puissance 31.

Au lieu d'effectuer une atténuation dans la voie d'écoute amplifiée, ou en complément de cette atténuation, on peut encore prévoir d'effectuer une atténuation dans la voie d'émission au moyen d'un atténuateur 42, inséré entre le microphone 3 et le circuit séparateur 30. Dans ce cas, et ainsi qu'il a été représenté à la figure 4, l'atténuateur 42 est à son tour mis en service par un commutateur 43 commandé à partir de la borne 25 et contrôlé par le dispositif de temporisation 34.

Selon un mode de mise en oeuvre avantageux de l'invention, le commutateur temporisé 34 comporte des moyens pour appliquer des durées de temporisation différentes, de sorte que ce commutateur mette en service le ou les atténuateurs 32 et/ou 42 pour une première durée comptée à partir du début de la conversation, dont la valeur est de l'ordre de la seconde, tandis que la ou les mises en service des atténuateurs 32 et/ou 42 - dans le cas où elles se produisent - sont appliquées pendant une autre durée de valeur plus élevée que la première durée. Dans ce cas, on utilise un signal de remise à zéro du dispositif de temporisation 34 à partir de la borne 35, comme il a été indiqué précédemment.

Avantageusement, l'un ou l'autre des atténuateurs 32 et 42, ou l'ensemble de ces atténuateurs, peut comporter plusieurs niveaux discrets d'atténuation qui sont mis successivement en service dans un ordre croissant sous l'effet de la commande du dispositif anti-Larsen alors que le niveau d'atténuation obtenu après disparition de l'effet Larsen est ensuite maintenu par une temporisation dont la durée a une valeur très supérieure à la seconde. Dans ce cas, l'un ou l'autre des atténuateurs 32, 42 peut être constitué par une chaîne de résistances qui sont insérées successivement au moyen du commutateur associé 33,43 qui est alors un commutateur multi-voies. L'insertion successive des résistances d'atténuation peut être prévue, par exemple par bonds de 6 dB d'atténuation.

Il est avantageux dans ce mode de mise en oeuvre d'effectuer d'abord, avec un délai court, les mises en service successives des résistances d'atténuation jusqu'à ce que l'effet Larsen disparaisse. Après quoi, la temporisation maintient avantageusement la situation obtenue, pour une durée de temporisation de valeur très supérieure à la seconde et par exemple pouvant s'étendre pendant le reste de la conversation. Là encore, le dispositif de temporisation 34 est remis à zéro par la borne 35 au moment du décrochage du combiné.

Selon un autre mode de mise en oeuvre de l'invention, qui peut à volonté être combiné aux modes précédents déjà décrits, on prévoit une utilisation d'au moins un atténuateur dans chacune des voies d'émission et d'écoute, et des moyens de commutation pour la mise en service de ces atténuateurs alternativement dans chacune desdites voies, ainsi que l'utilisation d'un dispositif de détection de parole 50 pour la commande desdits moyens de commutation. Le dispositif de détection de parole 50 fait partie du domaine technique connu, de sorte qu'il n'est pas nécessaire de le décrire ici.

Dans la schéma de la figure 4 le dispositif de détection de parole 50 reçoit deux signaux d'entrée l'un en provenance du microphone 3 et l'autre en provenance de l'écouteur 4. Il fournit sur ses deux sorties des signaux de commande respectivement appliqués aux commutateurs 33 et 43.

Ainsi, lorsqu'un signal provenant du microphone 3 présente, après détection, une valeur supérieure au niveau du signal de l'écouteur 4 c'est la voie d'éccute amplifiée qui est alors atténuée au moyen de l'atténuateur 32 et du commutateur 33 alors que dans le cas inverse, c'est l'atténuateur 42 qui est mis en service par le commutateur 43 tandis que l'atténuateur 32 est court-circuité. La mise en ou hors service de ces atténuateurs est autorisée par le signal présent sur la borne 25.

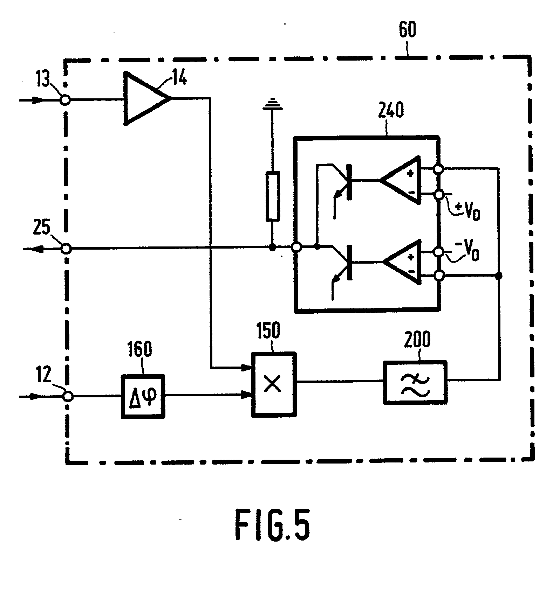

On se reporte maintenant à la figure 5 pour décrire un circuit de détection de l'effet Larsen correspondant à une variante du circuit 6 de la figure 1.

Les bornes d'accès 12, 13 et 25 au circuit de détection 60 de l'effet Larsen sont raccordées aux autres circuits du poste téléphonique de la même manière qu'à la figure 1. Il comporte un seul circuit multiplicateur 150 analogique dont l'une des entrées reçoit le signal appliqué au haut parleur, par la borne 12 et l'autre entrée reçoit le signal provenant du microphone, par la borne 13, après amplification dans un amplificateur à gain élevé 14.

Sur l'une ou l'autre des entrées du circuit multiplicateur 150, le signal correspondant, - dans l'exemple, le signal du haut-parleur -, peut être appliqué via un circuit déphaseur 160, pour une éventuelle correction de phase.

La sortie du circuit multiplicateur 150 est connectée à un filtre passe-bas 200 lequel fournit un signal de sortie qui est appliqué à l'entrée d'un circuit de déclenchement 240 à deux seuils symétriques. Finalement, le circuit de déclenchement 240 fournit à sa sortie un signal de commande transmis à la borne 25 et destiné à commander le commutateur temporisé, (non représenté) qui met en service l'atténuation de signal convenable.

L'utilisation d'un circuit de déclenchement 240 qui compare deux entrées de signaux à deux seuils symétriques de tension +Vo et -Vo, est ici nécessaire car le signe de la composante continue en sortie du circuit multiplicateur 150 n'est pas connu.

Ce signe en effet dépend du signal anti-local qui, du fait qu'il résulte d'une différence de deux signaux, en alternatif, peut être en phase ou en opposiiion de phase avec le signal du microphone.

Le circuit de détection 60, bien que notablement simplifié par rapport au circuit 6 de la figure 1, fonctionne néanmoins sur le même principe et il peut lui être substitué dans la majorité des cas sans que l'on observe de dégradation notable des performances.

La simplification opérée dans la structure du circuit de détection 60 repose sur la constatation suivante : l'oscillation due à l'effet Larsen invervient lorsque les signaux acoustiques du haut-parleur parviennent au microphone et y produisent un signal tel que le gain de la boucle ainsi formée soit supérieur à l'unité et la somme des déphasages intervenant dans la boucle soit nulle. En pratique, lorsque la distance entre le haut-parleur et le microphone varie, deux cas peuvent se produire ; ou bien la fréquence d'oscillation varie quelque peu autour de la fréquence du maximum de la courbe de réponse de la chaîne : microphone-amplificateurs - haut-parleur, de manière à maintenir la somme des déphasages nulle, ou bien l'oscillation ne se produit que pour des valeurs particulières de la distance acoustique si la courbe de réponse de la chaîne d'amplification présente un maximum très aigü d'amplitude.

Si on suppose que les déphasages d'origine électrique (amplificateurs notamment) sont toujours nuls à la fréquence d'oscillation Larsen il n'y a pas lieu d'utiliser un circuit déphaseur tel que 160 pour obtenir à la sortie du circuit multiplicateur 150 une composante de courant continu non nulle.

Dans la majorité des essais pratiques, on observe que les déphasages d'origine électrique, bien que pouvant être différents de zéro, ne varient qu'assez faiblement dans la plage limitée des fréquences où se produit l'oscillation Larsen.

On peut alors utiliser le circuit de détection d'effet Larsen dans sa version simplifiée représentée à la figure 5 dans lequel le circuit déphaseur 160 a été réglé par expérience, à une valeur de déphasage qui compense au moins partiellement la somme des déphasages d'origine électrique et procure un signal significatif (non nul) de la composante continue à la sortie du circuit multiplicateur 150.

La sensibilité que peut présenter en fonction des circonstances, le circuit de détection 60 à de petites fluctuations de phase, peut être pratiquement annulée par un choix convenable des tension de seuils +Vo et -Vo appliquées aux entrées du circuit de déclenchement 240.

Bien entendu, les modes complémentaires de mise en oeuvre de l'invention décrits à propos de la figure 4 sont également applicables en association avec le circuit de détection 60 de la figure 5.

Bien que l'invention ait été décrite ici par des exemples de réalisation, il reste entendu que des variantes, facilement imaginables par l'homme de l'art, sont possibles et que ces variantes appartiennent néanmoins au domaine de l'invention. A titre d'exemple, il a été indiqué d'utiliser des atténuateurs se présentant notamment sous la forme de résistances insérées dans l'une des voies d'écoute ou d'émission. Bien entendu, en désignant par le terme atténuateur un dispositif de ce genre, on entend désigner également en tant qu'équivalents, des amplificateurs à gain variable dont une ou plusieurs valeurs de gain peut (peuvent) être commandable(s).

## Revendications

1. Poste téléphonique à écoute amplifiée muni d'un dispositif anti-Larsen, d'un circuit de séparation des signaux reçus ou émis sur une ligne téléphonique, d'un microphone (3), d'un amplificateur de puissance pour les signaux reçus dont la sortie est connectée à un haut-parleur (5) d'écoute amplifiée, ledit dispositif anti-Larsen étant composé d'un circuit de détection d'un début d'instabilité qui commande, par un commutateur temporisé, la mise en service pour une durée prédéterminée, d'au moins un atténuateur dans le trajet d'au moins l'une des voies d'écoute ou d'émission, caractérisé en ce que le circuit de détection (6) d'instabilité comporte
- un premier circuit multiplicateur (11) analogique dont l'une des entrées reçoit le signal appliqué au haut-parleur (5) d'écoute et l'autre entrée reçoit le signal provenant du microphone (3) après amplification de ce signal par un amplificateur (14) à gain élevé,
- un deuxième circuit multiplicateur (15) analogique dont les entrées sont reliées en parallèle aux entrées du premier circuit multiplicateur (11), via pour l'une d'entre elles, un circuit déphaseur(16), ce circuit déphaseur introduisant un déphasage de 90° pour une fréquence voisine de celle à laquelle se produit l'effet Larsen,
- un circuit d'addition (23) à deux entrées,
- un premier filtre passe-bas (18) dont l'entrée est connectée à la sortie du premier circuit multiplicateur (11), dont la sortie est reliée à l'une des entrées du circuit d'addition (23) via un convertisseur de signal en valeur absolue (19), et un deuxième filtre passe-bas (20) dont l'entrée est connectée à la sortie du deuxième circuit multiplicateur (15), dont la sortie est reliée à l'autre entrée du circuit d'addition (23) via un autre convertisseur de signal en valeur absolue (21),
- un comparateur à seuil (24) recevant le signal de sortie du circuit d'addition (23) et fournissant en sortie un signal de commande pour ledit commutateur temporisé.

2. Poste téléphonique à écoute amplifiée muni d'un dispositif anti-Larsen, d'un circuit de séparation des signaux reçus ou émis sur une ligne téléphonique, d'un microphone (3), d'un amplificateur de puissance pour les signaux reçus dont la sortie est connectée à un haut-parleur (5) d'écoute amplifiée, ledit dispositif anti-Larsen étant composé d'un circuit de détection d'un début d'instabilité qui commande, par un commutateur temporisé, la mise en service pour une durée prédéterminée, d'au moins un atténuateur dans le trajet d'au moins l'une des voies d'écoute ou d'émission, caractérisé en ce que le circuit de détection (60) d'instabilité comporte
- un circuit multiplicateur (150) analogique dont l'une des entrées reçoit le signal appliqué au haut-parleur (5) d'écoute, et l'autre entrée reçoit le signal provenant du microphone (3) après amplification de ce signal par un amplificateur (14) à gain élevé,
- un filtre passe-bas (200) dont l'entrée est connectée à la sortie du circuit multiplicateur (150),
- et un circuit de déclenchement (240) à deux seuils symétriques recevant en entrée le signal de sortie du filtre passe-bas (200) et fournissant en sortie un signal de commande pour ledit commutateur temporisé.

3. Poste téléphonique à écoute amplifiée selon la revendication 2, caractérisé en ce que sur l'une des deux entrées du circuit multiplicateur (150) analogique, le signal correspondant y est appliqué via un circuit déphaseur (160) introduisant un déphasage de compensation Δφ, déterminé expérimentalement, pour une plage de fréquences dans laquelle se produit l'effet Larsen.

4. Poste téléphonique à écoute amplifiée selon l'une quelconque des revendications 1 à 3, caractérisé en ce que le commutateur temporisé (33, 43, 34) comporte des moyens pour appliquer des durées de temporisation différentes, et en ce qu'il met en service si nécessaire ledit atténuateur (32, 42) pour une première durée comptée à partir du début de la conversation téléphonique, dont la valeur est de l'ordre de la seconde, tandis que la ou les mises en service suivantes de l'atténuateur (32, 42), lorsqu'elles se produisent, sont appliquées pendant une autre durée de valeur plus élevée que la première durée.

5. Poste téléphonique à écoute amplifiée selon l'une quelconque des revendications 1 à 4, caractérisé en ce que l'atténuateur (32, 42) comporte plusieurs niveaux discrets d'atténuation qui sont mis en service successivement dans un ordre croissant sous l'effet de la commande du dispositif anti-Larsen (6, 60), alors que le niveau d'atténuation obtenu après disparition de l'effet Larsen est ensuite maintenu.

6. Poste téléphonique à écoute amplifiée selon l'une quelconque des revendications 1 à 5, caractérisé par l'utilisation d'au moins un atténuateur (32, 42) dans chacune des voies d'émission et d'écoute et par la présence de moyens de commutation (33, 43), pour la mise en service de ces atténuateurs alternativement dans chacune desdites voies, ainsi que la présence d'un dispositif de détection de parole (50) pour la commande desdits moyens de commutation.

## Claims

1. A loudspeaker telephone set having an anti-Larsen device, a circuit to separate the signals received or transmitted on a telephone line, a microphone (3), and a power amplifier for received signals, whose output is connected to a loudspeaker (5) for amplified listening, said anti-Larsen device being formed by a circuit for detecting a start of instability which, via a delayed switch, controls the insertion in circuit for a predetermined period of at least one attenuator in the path of at least one of the listening or transmission channels, in which the instability-detection circuit (6) comprises:
   - a first analogue multiplier circuit (11) one of whose inputs receives the signal applied to the listening loudspeaker (5) while the other input receives the signal from the microphone (3) after amplification of this signal by a high-gain amplifier (14);
   - a second analogue multiplier circuit (15) whose inputs are connected in parallel to the inputs of the first multiplier circuit (11) via, in the rase of one of them, a phase-shift circuit (16), this phase-shift circuit introducing a phase-shift of 90° for a frequency near that at which the Larsen-effect occurs;
   - a two-input adder circuit (23);
   - a first low-pass filter (18) whose input is connected to the output of the first multiplier circuit (11) and whose output is connected to one of the inputs of the adder circuit (23) via an absolute-value converter (19), and a second low-pass filter (20) whose input is connected to the output of the second multiplier circuit (15) and whose output is connected to the other input of the adder circuit (23) via another absolute-value converter (21); and
   - a threshold comparator (24) receiving the output signal from the adder circuit (23) and delivering at its output a control signal for said delayed switch.

2. A loudspeaker telephone set having an anti-Larsen device, a circuit to separate the signals received or transmitted on a telephone line, a microphone (3) and a power amplifier for received signals, whose output is connected to a loudspeaker (5) for amplified listening, said anti-Larsen device consisting of a circuit for detecting a start of instability which, via a delayed switch, controls the insertion in circuit for a predetermined duration of at least one attenuator in the path of at least one of the listening or transmission channels, in which the instability-detection circuit (60) comprises:

- an analogue multiplier circuit (150) one of whose inputs receives the signal applied to the listening loudspeaker (5) while the other input receives the signal from the microphone (3) after amplification of this signal by a high-gain amplifier (14);
- a low-pass filter (200) whose input is connected to the input of the multiplier circuit (150); and
- a trigger circuit (240) with two symmetrical thresholds receiving at their input the output signal from the low-pass filter and delivering at their output a control signal for the said delayed switch.

3. A loudspeaker telephone set as claimed in Claim 2, in which, at one of the two inputs of the analogue multiplier circuit (150), the corresponding signal is applied to it via a phase-shift circuit (160) introducing a compensation phase-shift Δφ determined experimentally, for a range of frequencies in which the Larsen-effect occurs.

4. A loudspeaker telephone set as claimed in any one of the Claims 1 to 3, in which the delayed switch (33, 43, 34) incorporates means for applying different delay times, and in which, if necessary, said attenuator (32, 42) is inserted in circuit for a first duration counting from the start of the telephone call, whose value is of the order of a second, while the subsequent insertion(s) of the attenuator (32, 42) into circuit, when it/they occur(s), are applied for a longer period of time than the first period.

5. A loudspeaker telephone set as claimed in any one of claims 1 to 4, in which the attenuator (32, 42) has several discrete attenuation levels which are inserted in service successively in increasing order in response to a command from the anti-Larsen device (6, 60) whereas the attenuation level obtained after the disappearance of the Larsen-effect is maintained thereafter.

6. A loudspeaker telephone set as claimed in any one of Claims 1 to 5, in which the use of at least one attenuator (32, 42) in each of the transmission and listening channels and the presence of switching devices (33, 43) for the insertion in circuit of these attenuators alternately in each of the said channels and the presence of the speech-detection device (50) for the control of the said switching devices are characteristic features.

**Patentansprüche**

1. Fernsprechapparat mit Lauthörbetriebsart, der mit den folgenden Elementen versehen ist: einer Anti-Larsen-Anordnung, einer Signaltrennstufe zum Trennen der in einer Fernsprechleitung empfangenen und gesendeten Signale, einem Mikrophon (3), einem Leistungsverstärker für die empfangenen Signale, dessen Ausgang mit einem Lautsprecher (5) für die Lauthörbetriebsart verbunden ist, wobei diese Anti-Larsen-Anordnung aus einer Detektionsschaltung zum Detektieren eines Anfangs einer Unstabilität besteht, die über einen zeitgesteuerten Schalter die Einschaltung während einer vorbestimmten Dauer wenigstens eines Dämpfungsgliedes in mindestens einer der Hör- oder Sendestrecken steuert, dadurch gekennzeichnet, daß die Detektionsschaltung (6) für die Unstabilität die folgenden Elemente aufweist:

- eine erste analoge Multiplizierschaltung (11), von der einer der Eingänge das dem Lautsprecher (5) für die Lauthörbetriebsart zugeführte Signal und der andere Eingang das Signal des Mikrophons (3) nach Verstärkung dieses Signals durch einen Verstärker (14) mit hoher Verstärkung erhält,
- eine zweite analoge Multiplizierschaltung (15), deren Eingänge parallel mit den Eingängen der ersten Multiplizierschaltung (11) verbunden sind, und zwar für einen derselben über einen Phasenschieber (16), der eine Phasenverschiebung von 90° einführt für eine Frequenz in der Nähe von derjenigen Frequenz, die den Larsen-Effekt erzeugt,
- eine Addierschaltung (23) mit zwei Eingängen,
- ein erstes Tiefpaßfilter (18), dessen Eingang mit dem Ausgang der ersten Multiplizierschaltung (11) verbunden ist und dessen Ausgang über einen Absolutwert-Signalwandler (19) mit einem der Eingänge der Addierschaltung (23) verbunden ist, und
- ein zweites Tiefpaßfilter (20), dessen Eingang mit dem Ausgang der zweiten Multiplizierschaltung (15) verbunden ist und dessen Ausgang über einen weiteren Absolutwert-Signalwandler (21) mit dem anderen Eingang der Addierschaltung (23) verbunden ist,
- eine Schwellenvergleichsschaltung (24), die das Ausgangssignal der Addierschaltung (23) zugeführt bekommt und am Ausgang ein Steuersignal für den genannten zeitgesteuerten Schalter liefert.

2. Fernsprechapparat mit Lauthörbetriebsart, mit einer Anti-Larsen-Anordnung, einer Signaltrennstufe zum Trennen der in einer Fernsprechleitung empfangenen oder gesendeten Signale, einem Mikrophon (3), einem Leistungsverstärker für die empfangenen Signale, dessen Ausgang mit einem Lautsprecher (5) für die Lauthörbetriebsart verbunden ist, wobei diese Anti-Larsen-Anordnung aus einer Detektionsschaltung zum Detektieren eines Anfangs einer Unstabilität besteht, die über einen zeitgesteuerten Schalter die Einschaltung während einer vorbestimmten Dauer wenigstens eines Dämpfungsgliedes in einer der Hör- oder Sendestrecken steuert, dadurch gekennzeichnet, daß die Detektionsschaltung (60) für die Unstabilität die folgenden Elemente aufweist:

- eine erste analoge Multiplizierschaltung (150), von der einer der Eingänge das dem Lautsprecher (5) für die Lauthörbetriebsart zugeführte Signal und der andere Eingang das Signal des Mikrophons (3) nach Verstärkung dieses Signals durch einen Hochleistungs-Verstärker (14) erhält,
- ein Tiefpaßfilter (200) dessen Eingang mit dem Ausgang einer Multiplizierschaltung (150) verbunden ist,
- und einen Abschaltkreis (240) mit zwei symmetrischen Schwellen, der am Eingang das Ausgangssignal des Tiefpaßfilters (200) erhält und am Ausgang ein Steuersignal für den genannten zeitgesteuerten Schalter liefert.

3. Fernsprechapparat mit Lauthörbetriebsart nach Anspruch 2, dadurch gekennzeichnet, daß an einem der beiden Eingänge der analogen Multiplizierschaltung (150) über einen Phasenschieber (160), der eine experimentell bestimmte Ausgleichsphasenverschiebung gleich $\Delta\varphi$ für ein Frequenzgebiet, in dem der Larsen-Effekt auftritt, das entsprechende Signal zugeführt wird.

4. Fernsprechapparat mit Lauthörbetriebsart nach einem der Ansprüche 1 bis 3, dadurch gekennzeichnet, daß der zeitgesteuerte Schalter (33, 43, 34) Mittel aufweist zum Zuführen unterschiedlicher Steuerzeiten, und daß der genannte Dämpfer (32, 42) für eine erste Dauer gerechnet vom Anfang des Ferngesprächs an eingeschaltet wird, wobei der Wert dieser Dauer in der Größenordnung von einer Sekunde liegt, während die nachfolgenden Einschaltungen des Dämpfers (32, 42), wenn diese auftreten, während einer anderen Dauer größeren Wertes als der der ersten Dauer durchgeführt werden.

5. Fernsprechapparat mit Lauthörbetriebsart nach einem der Ansprüche 1 bis 4, dadurch gekennzeichnet, daß der Dämpfer (32, 42) mehrere diskrete Dämpfungspegel aufweist, die in steigender Ordnung nacheinander in Betrieb gesetzt werden unter dem Einfluß der Steuerung durch die Anti-Larsen-Anordnung (6, 60), wobei der nach dem Unterdrücken des Larsen-Effektes erhaltene Dämpfungspegel danach beibehalten wird.

6. Fernsprechapparat mit Lauthörbetriebsart nach einem der Ansprüche 1 bis 5, gekennzeichnet durch die Verwendung mindestens eines Dämpfers (32, 42) in jeder der Sende- und Hörstrecken und durch das Vorhandensein von Schaltmitteln (33, 43) zum wechselweisen Einschalten dieser Dämpfer in jeder der genannten Strecken, sowie durch das Vorhandensein einer Sprechdetektionsanordnung (50) zum Steuern der genannten Schaltmittel.

**FIG.1**

**FIG.2**

FIG. 3

FIG. 4

FIG.5